**Europäisches Patentamt**

**European Patent Office**

**Office européen des brevets**

(19)

(11) Numéro de publication: **0 211 771 B1**

(12) **FASCICULE DE BREVET EUROPEEN**

(45) Date de publication du fascicule du brevet:
**26.10.88**

(51) Int. Cl.⁴: **B 29 C 53/44**, B 29 C 67/14, E 04 B 1/58, E 04 C 3/28

(21) Numéro de dépôt: **86401826.2**

(22) Date de dépôt: **18.08.86**

(54) **Elément tubulaire composite destiné à former une pièce de structure, son procédé de fabrication et dispositif de mise en oeuvre du procédé.**

(30) Priorité: **21.08.85 FR 8512592**

(43) Date de publication de la demande:
**25.02.87 Bulletin 87/9**

(45) Mention de la délivrance du brevet:
**26.10.88 Bulletin 88/43**

(84) Etats contractants désignés:
**DE GB IT NL SE**

(56) Documents cités:
**DE - A - 2 065 111**
**DE - A - 2 334 645**
**DE - A - 2 453 503**
**FR - A - 1 417 300**
**GB - A - 24 338**

(73) Titulaire: **AEROSPATIALE SOCIETE NATIONALE INDUSTRIELLE, 37, Boulevard de Montmorency, F-75781 Paris Cédex 16 (FR)**

(72) Inventeur: **Coutant, Hervé, 5 Square du Dragon, F-78150 Le Chesnay (FR)**
Inventeur: **Jumel, Jean-Pierre, 67bis avenue Belloy, F-78110 Le Vesinet (FR)**

(74) Mandataire: **Bonnetat, Christian et al, Cabinet PROPI Conseils 23 rue de Léningrad, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

La présente invention concerne un élément tubulaire composite, c'est-à-dire réalisé en fibres résistantes (verre, carbone, bore, etc...) enrobées de résine durcissable, destiné à former une pièce de structure légère et résistante. Quoique non exclusivement, elle est particulièrement adaptée à la réalisation de pièces de structure pour les avions, les hélicoptères, les satellites artificiels, etc.... La présente invention concerne également un procédé et un dispositif pour la fabrication d'un tel élément tubulaire.

On a déjà pensé à réaliser des pièces de structures aéronautiques ou spatiales, telles que contre-fiches de plancher ou membrures de nervures de treillis par exemple, au moyen d'éléments tubulaires composites. De tels éléments travaillent en traction, en compression et en flexion et il est souhaitable qu'ils présentent une bonne rigidité de flambage, ainsi qu'une bonne capacité à résister à des efforts tranchants.

Par ailleurs, pour leur fixation aux autres pièces d'une structure, les éléments tubulaires connus nécessitent l'agencement d'embouts à leurs extrémités.

Ces embouts sont généralement rapportés et fixés par rivets et/ou collés, de sorte que les efforts sont transférés par des zones très localisées, ce qui conduit à la nécessité de renforcements locaux très importants. De plus, les embouts sont le plus souvent métalliques, et il peut en résulter des problèmes de dilatation différentielle et/ou de corrosion galvanique.

Pour ces raisons supplémentaires, les éléments tubulaires composites connus sont peu adaptés à supporter des efforts autres que ceux de compression et de traction.

La présente invention a pour objet de remédier à ces inconvénients et de réaliser des éléments tubulaires structuraux composites particulièrement résistants même aux sollicitations de flexion et aux efforts tranchants, pouvant être reliés à d'autres pièces d'une structure sans agencement d'embouts rapportés spéciaux.

Selon le DE-A-2 453 503, un élément tubulaire structural destiné à former une pièce d'une structure comportant une paroi axiale interne faisant partie intégrante dudit élément et s'étendant sur toute la longueur de celui-ci est connu. Selon l'invention l'élément est caractérisé en ce qu'il est réalisé d'une seule pièce en fibres résistantes enrobées de résine synthétique durcissable et en ce qu'aux extrémités dudit élément, des portions de ladite paroi axiale sont accessibles pour former des zones de fixation dudit élément à d'autres pièces de ladite structure.

On voit qu'ainsi ladite paroi axiale communique à l'élément tubulaire d'excellentes propriétés de résistance aussi bien en traction et en compression qu'en flexion ou aux efforts tranchants, tout en permettant la liaison à d'autres pièces de structure (également constituées d'éléments tubulaires identiques ou bien d'éléments totalement différents, comme par exemple des profilés métalliques), sans agencement d'embouts rapportés.

En effet, de préférence, les parties accessibles de ladite paroi axiale sont percées de trous pour le passage de moyens de fixation, tels que par exemple rivets, vis, boulons, etc... Le parties accessibles de ladite paroi axiale pourraient être dégagées sur leur deux faces opposées. Cependant, à des fins de résistance mécanique, il est préférable que ces parties ne soient dégagées que d'un côté, leur autre côté étant recouvert par le contour extérieur dudit élément.

La section de la partie courante (c'est-à-dire n'incluant pas les extrémités) dudit élément présente donc la forme au moins approximative de la lettre grecque théta. Cette section peut avoir un contour circulaire et alors la paroi axiale devient diamétrale. En revanche, la section des extrémités dudit élément est en forme de demi-lune, également circulaire, éventuellement. La partie du contour extérieur curviligne des extrémités peut être évidée en regard des trous de passage des moyens de fixation prévus dans les parties accessibles de la paroi axiale, afin de faciliter la mise en place desdits moyens de fixation. Suivant les dispositions de la structure à laquelle appartient ledit élément, les faces accessibles d'extrémité de ladite paroi axiale peuvent être dirigées dans le même sens ou dans des sens opposés.

De préférence, des renforts de fibres résistantes sont prévus dans les extrémités dudit élément tubulaire.

Selon un procédé préférentiel de réalisation, pour obtenir un élément tubulaire conforme à la présente invention, on enroule autour de son axe longitudinal une bande souple composée de fibres résistantes enrobées de résine durcissable pour obtenir un élément tubulaire allongé souple ayant une section au moins approximativement en forme de théta, puis l'on soumet ledit élément tubulaire aux conditions de température et de pression permettant le durcissement de ladite résine.

L'accessibilité des parties d'extrémité de la paroi axiale (diamétrale) peut être obtenue, soit par usinage après durcissement de la résine, soit par découpe d'échancrures dans ladite bande souple avant enroulement.

De préférence, les renforcements des extrémités sont constitués de portions de la même bande de fibres résistantes enrobées de résine durcissable. Ces portions sont appliquées sur la bande souple avant son enroulement. Dans le cas où ladite bande souple est composée d'une nappe de fibres unidirectionnelles, on peut faire en sorte que les fibres de ladite bande souple et celles des pièces de renforcement aient des directions différentes, afin d'optimiser ledit élément tubulaire en fonction de la direction et de la répartition des efforts qui lui seront appliqués.

Pour mettre en œuvre ce procédé, on peut utiliser un dispositif du type à mandrin et moule comportant deux mandrins qui sont susceptibles de s'appliquer l'un contre l'autre par des faces en regard correspondant à ladite paroi axiale interne et dont la surface, à l'extérieur desdites faces, correspond au contour extérieur dudit élément.

Dans ce dispositif, les deux mandrins pourraient être rigides (par exemple en acier), alors que le moule serait rétractable pour venir presser contre lesdits mandrins, la bande souple qui y est enroulé, pendant le processus de durcissement de la résine. Toutefois, dans un mode avantageux de réalisation, ledit moule est rigide, alors que lesdits mandrins sont radialement expansibles et rétractables.

Les figures du dessin annexé feront bien comprendre comment l'invention peut être réalisée. Sur ces figures, des références identiques désignent des éléments semblables.

La figure 1 est une vue latérale d'un exemple de réalisation d'un élément tubulaire structural conforme à l'invention.

Les figures 2 et 3 sont des coupes transversales, respectivement selon les lignes II-II et III-III de la figure 1.

La figure 4 montre une variante de la figure 2.

La figure 5 illustre en vue partielle en perspective une ébauche à partir de laquelle on peut réaliser l'élément de la figure 1 par enroulement.

La figure 6 illustre le processus d'enroulement de l'ébauche de la figure 5.

La figure 7 montre, en vue schématique éclatée, un dispositif pour la réalisation d'un élément tubulaire selon l'invention.

La figure 8 montre une portion de structure en treillis comportant un élément tubulaire conforme à l'invention, mais différent de celui de la figure 1.

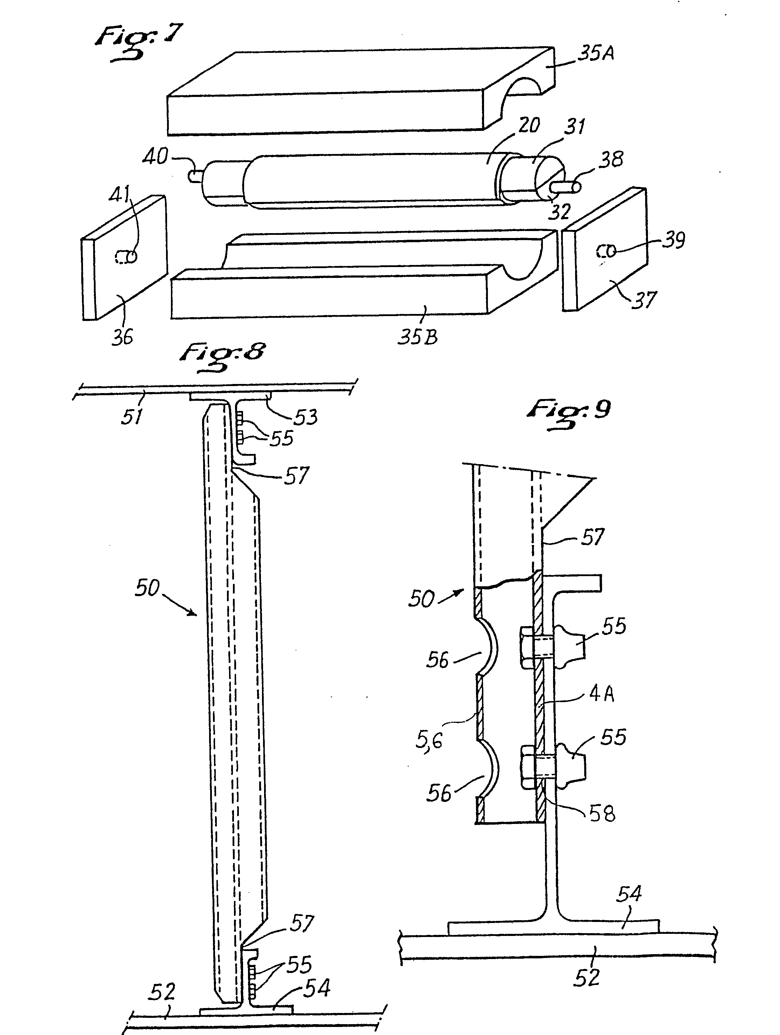

La figure 9 illustre la fixation de l'élément tubulaire de la figure 8 à un autre élément de ladite structure en treillis.

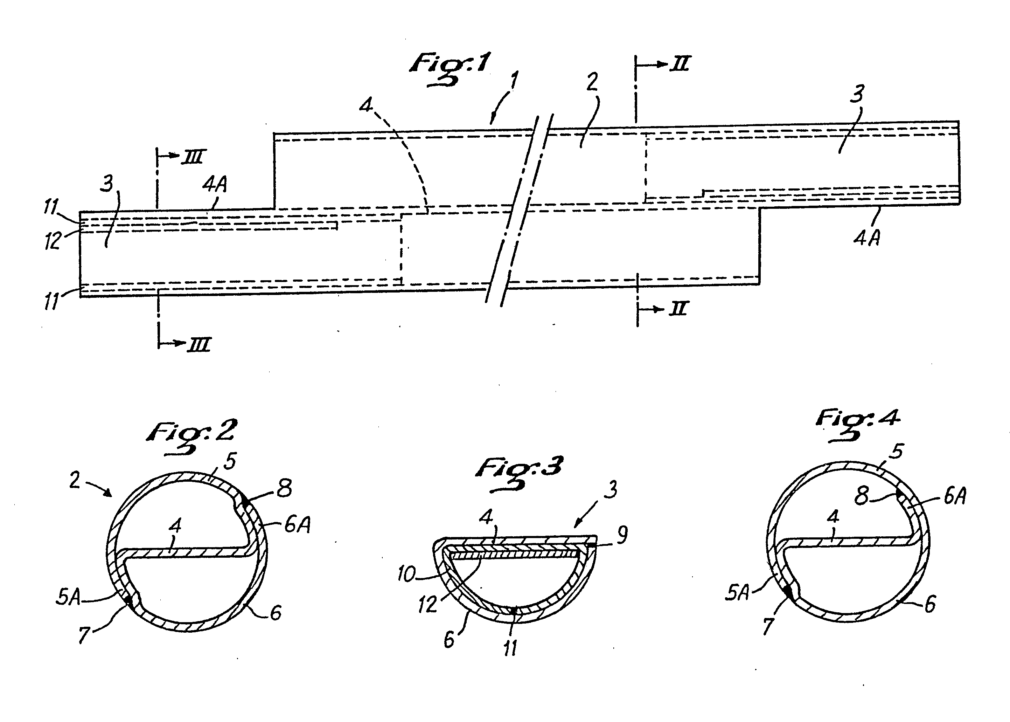

L'élément tubulaire structural 1, montré à titre d'exemple sur la figure 1, est réalisé en fibres résistantes enrobées de résine durcissable et est destiné à former une pièce d'une structure. Il comporte une partie intermédiaire (ou courante) 2, et deux parties d'extrémité 3.

Dans sa partie intermédiaire 2, l'élément 1 présente une section en forme de théta circulaire, constitué d'une paroi diamétrale interne 4 et d'un contour circulaire externe formé de deux demi-cercles 5 et 6. Les demi-cercles 5 et 6 sont respectivement reliés, d'un côté, aux extrémités diamétralement opposées de la paroi 4 et, de l'autre côté, à des prolongements respectifs 5A et 6A, recouvrant l'autre demi-cercle 6 et 5. Aux emplacements où les prolongements 5A et 6A recouvrent respectivement les demi-cercles 6 et 5, ceux-ci sont déformés vers l'intérieur pour que la ligne de contour extérieure de l'élément 1 soit parfaitement circulaire, malgré les surépaisseurs qui en résultent. Des remplissages de résine durcissable 7 et 8 assurent la continuité du contour extérieur entre les prolongements 5A et 6A, d'une part, et les demi-cercles 6 et 5, d'autre part.

A ses extrémités 3, l'élément 1 présente une section en forme de demi-lune circulaire, constituée d'une partie de la paroi diamétrale 4 et de l'un ou l'autre des demi-cercles 5 ou 6. A l'extrémité gauche, le demi-cercle 5 a été supprimé et la face 4A, de la paroi 4, opposée au demi-cercle 6 est accessible. A l'extrémité droite, le demi-cercle 6 a été supprimé et la face 4A de la paroi 4, opposée au demi-cercle 5 est accessible. Dans l'exemple de réalisation de la figure 1, les deux portions d'extrémité 4A accessibles de la paroi 4 sont donc dirigées dans des sens opposés (l'une vers le haut et l'autre vers le bas de la figure 1).

Aux extrémités 3, le demi-cercle 5 (ou le demi-cercle 6) prolongent, d'un côté, la paroi 4 et sont reliés à cette dernière, de l'autre côté, par un collage 9 (résine durcissable).

Les extrémités 3 peuvent être pourvues de renforcements, par exemple un renforcement hémi-cylindrique 10 dont les extrémités sont collées l'une à l'autre en 11, et un renforcement plan 12.

Sur la figure 4, on a représenté une variante de section de la partie 2 de l'élément 1. Dans ce cas, le prolongement 6A est intérieur au demi-cercle 5, au lieu d'être extérieur.

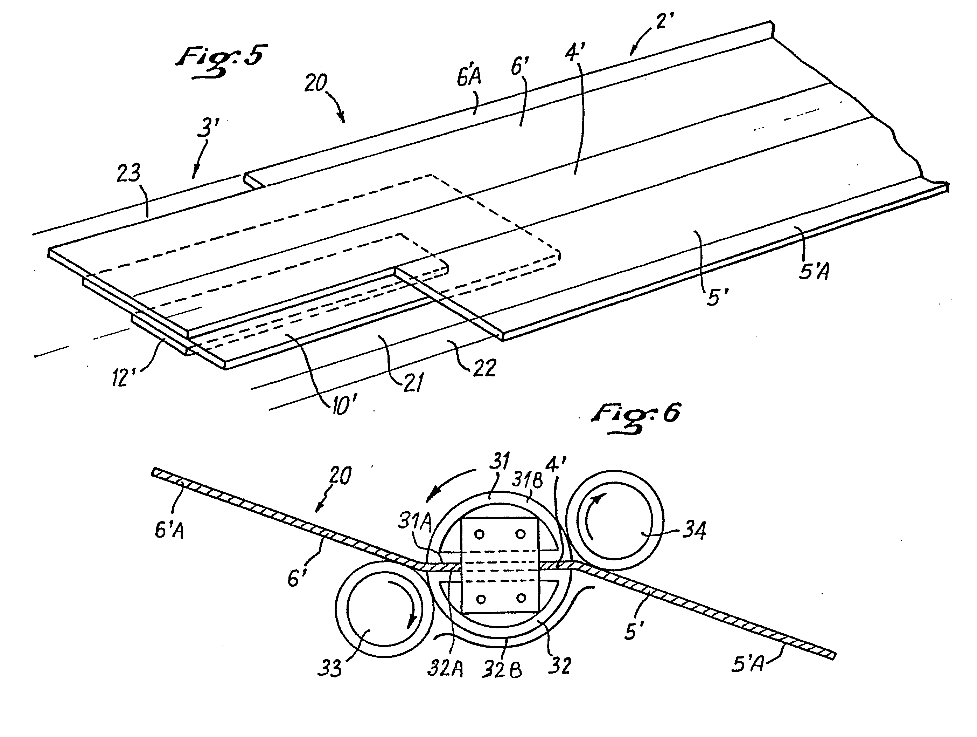

Pour réaliser l'élément 1 de la figure 1, on peut partir de l'ébauche en bande 20 représentée sur la figure 5. Cette ébauche comporte une partie intermédiaire 2' destinée à former la partie intermédiaire 2 et deux parties d'extrémité 3' (dont une seule est représentée sur la figure 5) correspondant aux extrémités 3.

La partie intermédiaire 2' est constituée de zones allongées juxtaposées transversalement, à savoir une zone centrale 4' (destinée à former la paroi diamétrale 4) reliée d'un côté à une zone 5' (destinée à former la paroi semi-circulaire extérieure 5) et de l'autre à une zone 6' (destinée à former la paroi semi-circulaire extérieure 6). Latéralement à la bande 20, sont prévus des zones marginales 5'A (reliée à la zone 5') et 6'A (reliée à la zone 6') respectivement destinées à former les recouvrements 5A et 6A.

A l'une des extrémités 3', les zones 5', 5'A et 6'A sont échancrées respectivement en 21, 22 et 23. A l'autre extrémité 3' (non représentée) ce sont les zones 5'A, 6' et 6'A qui sont échancrées de façon symétrique.

Par ailleur, sur une face de la bande 20, à l'extrémité 3', on applique des portions de bande de fibres résistantes 10' et 12', respectivement destinées à former les renforcements 10 et 12.

De préférence, la direction principale des fibres résistantes des pièces 10' et 12' est choisie différente de celle de la bande 20, afin d'optimiser l'effet des renforcements 10 et 12.

Après préparation complète de l'ébauche 20, celle-ci est pressée (voir la figure 6) entre deux mandrins allongés, d'axes parallèles à la longueur de la bande 20 et ayant une section semi-circulaire 31 et 32; les faces diamétrales 31A et 32A desdits mandrins viennent en superposition de la zone 4', de part et d'autre de ladite ébauche. Ensuite, les zones 5' et 5'A sont enroulées sur la paroi cylindrique 32B du mandrin 32, tandis que les zones 6' et 6'A sont enroulées sur la paroi cylindrique 31B du mandrin 31.

L'ensemble des mandrins 31 et 32 et de l'ébauche 20 enroulée sur eux de la façon décrite est introduit dans un moule 35A, 35B, 36 et 37 (figure 7). Ce moule est par exemple constitué de deux coques rigides 35A et 35B et de plaques d'extrémité 36 et 37 également rigides. En revanche, les mandrins 31 et 32 sont gonflables grâce à des raccords 38, 40 traversant respectivement les plaques 37 et 36 par des trous 39 et 41.

Après mise en place de l'ensemble 31, 32, 20 dans ledit moule, celui-ci est fermé, les mandrins 31 et 32 sont gonflés et les conditions de durcissement de la résine de l'ébauche 20 et des pièces 10' et 12' sont réalisées.

Après durcissement de ladite résine et ouverture du moule on obtient alors l'élément 1.

Bien entendu, après sortie du moule, l'élément selon l'invention, peut être soumis à des opérations de finition (mise à longueur, détourage, perçage de trous traversants dans les extrémités 4A) et de contrôle (par exemple par ultrasons). On pourrait réaliser l'élément 1 avec une section en thêta identique sur toute sa longueur, les portions 4A d'extrémité de la paroi diamétrale 4 étant alors dégagées, sur une ou deux faces, par usinage au moment de la finition.

Sur la figure 8, on a représenté une variante de réalisation 50 de l'élément conforme à l'invention, assemblée à d'autres éléments (profilés par exemple) 51 et 52 d'une structure en treillis, par l'intermédiaire de pattes de fixation 53 et 54 et de moyens de fixation traversants 55 (vis et écrous). Dans ce mode de réalisation, les deux faces 57 des parties accessibles 4A de la paroi diamétrale interne sont dirigées d'un même côté et sont percées de trous 58 pour lesdits moyens de fixation 55. La paroi circulaire 5 ou 6 en regard de ces parties accessibles 4A est percée de trous 56 dégageant l'accessibilité auxdits moyens de fixation 55.

## Revendications

1. Elément tubulaire structural (1) destiné à former une pièce d'une structure et comportant une paroi axiale interne (4) faisant partie intégrante dudit élément et s'étendant sur toute la longueur de celui-ci, caractérisé en ce qu'il est réalisé d'une seule pièce en fibres résistantes enrobées de résine synthétique durcissable et en ce que, aux extrémités (3) dudit élément (1), des portions (4A) de ladite paroi axiale (4) sont accessibles pour former des zones de fixation dudit élément à d'autres pièces de ladite structure.

2. Elément tubulaire selon la revendication 1, caractérisé en ce que, à chacune de ses extrémités (3), la paroi axiale interne n'est accessible (en 4A) que sur une de ses faces, son autre face étant recouverte par le contour extérieur dudit élément.

3. Elément tubulaire selon la revendication 2, caractérisé en ce que les faces accessibles (4A) de la paroi axiale interne (4) aux extrémités dudit élément sont dirigées latéralement du même côté.

4. Elément tubulaire selon la revendication 2, caractérisé en ce que les faces accessibles (4A) de la paroi axiale interne (4) aux extrémités dudit élément sont dirigées latéralement en sens opposés.

5. Elément tubulaire selon l'une des revendications 1 ou 2, caractérisé en ce que des renforts de fibres résistantes (11, 12) sont prévus dans les extrémités (3) dudit élément tubulaire.

6. Procédé pour réaliser un élément tubulaire structural (1) tel que spécifié sous l'une des revendications 1 à 5, caractérisé en ce qu'on enroule autour de son axe longitudinal une bande (20) souple composée de fibres résistantes enrobées de résine durcissable pour obtenir un élément tubulaire allongé souple ayant une section au moins approximativement en forme de thêta, des échancrures étant découpées dans ladite bande souple avant son enroulement, afin d'obtenir l'accessibilité des extrémités de la paroi axiale sans usinage ultérieur, puis l'on soumet ledit élément tubulaire souple aux conditions de température et de pression permettant le durcissement de ladite résine.

7. Procédé pour réaliser un élément tubulaire structural (1) tel que spécifié sous l'une des revendications 1 à 5, caractérisé en ce qu'on enroule autour de son axe longitudinal une bande (20) souple composée de fibres résistantes enrobées de résine durcissable pour obtenir un élément tubulaire allongé souple ayant une section au moins approximativement en forme de thêta, puis l'on soumet ledit élément tubulaire souple aux conditions de température et de pression permettant le durcissement de ladite résine, après quoi on usine lesdites extrémités de l'élément pour rendre accessibles lesdites portions (4A) de la paroi axiale (4).

8. Procédé selon l'une des revendications 5 ou 7, caractérisé en ce que l'on applique sur ladite bande souple, avant son enroulement, des portions de la même bande constituées de fibres résistantes enrobées de résine durcissable afin d'obtenir des renforcements locaux, la direction des fibres résistantes desdites portions étant le plus souvent différente de celle des fibres résistantes de ladite bande souple.

9. Dispositif pour la réalisation d'un élément tubulaire structural (1) tel que spécifié sous l'une des revendications 1 à 5, du type à mandrin et moule, caractérisé en ce qu'il comporte deux mandrins qui sont susceptibles de s'appliquer l'un contre l'autre par des faces en regard correspondant à ladite paroi axiale interne et dont la surface, à l'extérieur desdites faces, correspond au contour extérieur dudit élément.

10. Dispositif selon la revendications 9, caractérisé en ce que ledit moule est rigide, alors que lesdits mandrins sont radialement expansibles et rétractables.

## Patentansprüche

1. Rohrförmiges Strukturelement (1) zum Bilden eines Teils einer Struktur und mit einer axialen, fest mit dem Element (1) verbundenen, sich über dessen gesamte Länge erstreckenden Innenwand (4), dadurch gekennzeichnet, dass es einstückig aus widerstandsfähigen, mit härtbarem Kunstharz umhüllten Fasern besteht, und dass an den Enden (3) des Elements (1) Teile (4A) der axialen Wand (4) zugänglich sind, so dass Bereiche zum Befestigten des Elements (1) an anderen Teilen der Struktur entstehen.

2. Rohrförmiges Element nach Anspruch 1, dadurch gekennzeichnet, dass an jedem seiner Enden (3) die axiale Innenwand nur (bei 4A) auf einer ihrer Flächen zugänglich ist, wobei ihre andere Fläche von der Aussenkontur des Elements (1) abgedeckt wird.

3. Rohrförmiges Element nach Anspruch 2, dadurch gekennzeichnet, dass die zugänglichen Flächen (4A) der axialen Innenwand (4) an den Enden des Elements (1) seitlich zu derselben Seite gerichtet sind.

4. Rohrförmiges Element nach Anspruch 2, dadurch gekennzeichnet, dass die zugänglichen Flächen (4A) der axialen Innenwand (4) an den Enden des Elements (1) seitlich zu entgegengesetzten Seiten gerichtet sind.

5. Rohrförmiges Element nach einem der Ansprüche 1 oder 2, dadurch gekennzeichnet, dass Verstärkungen (11, 12) aus widerstandsfähigen Fasern an den Enden des rohrförmigen Elements vorgesehen sind.

6. Verfahren zur Herstellen eines rohrförmigen Strukturelements (1) nach einem der Ansprüche 1 bis 5, dadurch gekennzeichnet, dass ein biegsames Band (20) aus widerstandsfähigen, mit einem härtbaren Kunstharz umhüllten Fasern um seine Längsachse aufgerollt wird, wodurch sich ein längliches und biegsames rohrförmiges Element mit einem in etwa Theta-förmigen Querschnitt ergibt, wobei vor dem Aufrollen bogenförmige Ausschnitte in das biegsame Band geschnitten werden, um somit die Zugänglichkeit der Enden der axialen Wand ohne Nacharbeit zu erhalten, und dass dann das biegsame rohrförmige Element den eine Härtung des Harzes erlaubenden Temperatur- und Druckbedingungen unterworfen wird.

7. Verfahren zum Herstellen eines rohrförmigen Strukturelements (1) nach einem der Ansprüche 1 bis 5, dadurch gekennzeichnet, dass ein biegsames Band (20) aus widerstandsfähigen, mit einem härtbaren Kunstharz umhüllten Fasern um seine Längsachse aufgerollt wird, wodurch sich ein längliches und biegsames rohrförmiges Element mit einem in etwa Theta-förmigen Querschnitt ergibt, und dass dann das biegsame rohrförmigen Element den eine Härtung des Harzes erlaubenden Temperatur- und Druckbedingungen unterworfen wird, wonach dann die Enden des Elements bearbeitet werden, um die Teile (4A) der axialen Wand (4) zugänglich zu machen.

8. Verfahren nach einem der Ansprüche 6 oder 7, dadurch gekennzeichnet, dass vor dem Aufrollen auf das biegsame Band Teile desselben Bands aus widerstandsfähigen, mit einem härtbaren Harz umhüllten Fasern als örtliche Verstärkungen aufgebracht werden, wobei die Richtung der widerstandsfähigen Fasern dieser Teile meistens unterschiedlich ist von der der widerstandsfähigen Fasern des biegsamen Bands.

9. Vorrichtung zum Herstellen eines rohrförmigen Strukturelements (1) nach einem der Ansprüche 1 bis 5 von der Art Stempel und Form, dadurch gekennzeichnet, dass sie zwei Stempel umfasst, die sich gegeneinander an Flächen entsprechend gegenüber der axialen Innenwand abstützen und deren Oberfläche ausserhalb der genannten Flächen der Aussenkontur des Elements entspricht.

10. Vorrichtung nach Anspruch 9, dadurch gekennzeichnet, dass die Form starr ist, während die Stempel radial ausdehnbar und zurückziehbar sind.

## Claims

1. Structural tubular element (1) intended to form a part of a structure and comprising an inner axial wall (4) forming an integral part of said element and extending over the whole length thereof, characterized in that it is made in one piece of resistant fibers coated with hardenable synthetic resin and in that, at the ends (3) of said element (1) portions (4A) of said axial wall (4) are accessible in order to form zones of fixation of said element to other parts of said structure.

2. Tubular element according to Claim 1, characterized in that, at each of its ends (3), the inner axial wall is accessible (at 4A) only on one of its faces, its other face being covered by the outer contour of said element.

3. Tubular element according to Claim 2, characterized in that the accessible faces (4A) of the inner axial wall (4) at the ends of said element are directed laterally on the same side.

4. Tubular element according to Claim 2, characterized in that the accessible faces (4) of the inner axial wall (4) at the ends of said element are directed laterally in opposite directions.

5. Tubular element according to one of Claims 1 or 2, characterized in that reinforcements of resistant fibers (11, 12) are provided in the ends (3) of said tubular element.

6. Process for making a structural tubular element (1) as set forth in one of Claims 1 to 5, characterized in that there is wound around its longitudinal axis a flexible band (20) composed of resistant fibers coated with hardenable resin in order to obtain a flexible elongated tubular element having a section at least approximately in the form of a theta, notches being cut out in said flexible band before it is wound, in order to obtain accessibility of the ends of the axial wall without subsequent machining, then said flexible tubular element is subjected to the conditions of temperature and of pressure allowing the hardening of said resin.

7. Process for making a structural tubular element (1) as set forth in one of claims 1 to 5, characterized in that there is wound around its longitudinal axis a flexible band (20) composed of resistant fibers coated with hardenable resin in order to obtain a flexible elongated tubular element having a section at least approximately in the form of a theta, then said flexible tubular element is subjected to the conditions of temperature and of pressure allowing the hardening of said resin, and then the ends of the element are machined in order to obtain accessibility of said portions (4A) of the axial wall (4).

8. Process according to one of claims 6 or 7, characterized in that there are applied on said flexible band, before it is wound, portions of the same band constituted by resistant fibers coated with hardenable resin in order to obtain local reinforcements, the direction of the resistant fibers of said portions most often being different from that of the resistant fibers of said flexible band.

9. Device for making a structural tubular element (1) as set forth in one of claims 1 to 5, of the type with mandrel and mould, characterized in that it comprises two mandrels which are capable of being applied against each other opposite faces corresponding to said inner axial wall and of which the surface, outside said faces, corresponds to the outer contour of said element.

10. Device according to claim 9, characterized in that said mould is rigid, whilst said mandrels are radially expansible and retractable.

0 211 771

_Fig.1_

_Fig.2_

_Fig.3_

_Fig.4_

Fig.5

Fig.6

*Fig: 7*

35A
20
40
31
38
41
32
39
36
37
35B

*Fig: 8*

51
53
55
57
50
57
55
54
52

*Fig: 9*

57
50
56
55
4A
5,6
56
55
58
54
52